(19) Europäisches Patentamt
European Patent Office
Office européen des brevets

(11) **EP 2 317 727 A1**

(12) **EUROPEAN PATENT APPLICATION**

(43) Date of publication:
**04.05.2011 Bulletin 2011/18**

(51) Int Cl.:
***H04L 29/08*** (2006.01)

(21) Application number: **09306025.9**

(22) Date of filing: **28.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Alcatel Lucent**
**75008 Paris (FR)**

(72) Inventors:
• **De Schepper, Koen**
**2650 Edegem (BE)**

• **Huysegems, Rafael**
**2800 Walem (BE)**

(74) Representative: **D'Halleweyn, Nele Veerle Trees Gertrudis**
**Arnold & Siedsma**
**Sweelinckplein 1**
**2517 GK Den Haag (NL)**

(54) **Method for cache management and devices therefore**

(57)     A method for managing cached data within a network node device (4) comprised in a network is disclosed, the network comprising at least a server (1) hosting a content, a client (3) reguesting predetermined data comprised in the content and the network node device routing and/cr serving a request and comprising a means for storing data (5), wherein the method comprises
a. indicating a deadline to the network node device, the deadline defining a moment in time by which the predetermined data should have been delivered to the client;
b. determining a measure of urgency for the delivery of the predetermined data to the client in the network node device;
c. caching predetermined data on or removing predetermined data from the means for storing data of the node, based on the measure of urgency.
Also associated network node devices and client devices have been disclosed.

Fig. 4

**Description**

Technical field of the invention

The present invention relates to data availability on a network. More specifically it relates to optimization of data retrieval through a network and to cache replacement strategies in respective network nodes.

Background of the invention

Network services development is spurred by ever increasing end-user demands for richer content, more bandwidth, shorter latency and increased connection reliability. To fulfill these demands, one alternative would be to use data caching schemes. Caching schemes replicate a subset of a server data at many different locations of the network in order to serve client requests without having to go back to the main server site. When requests arrive for executing operations at a cache, the cache site attempts to satisfy the request from the locally cached data. If the required data is not present at the cache, it is retrieved from the origin site and it may be further stored at the cache for satisfying future requests. The primary benefits of caching are to make content load faster (reduce latency), to reduce wide area bandwidth usage (increase the effective bandwidth) and also to reduce the load imposed upon origin servers (increase connection reliability and QoS).

Almost all types of content (text, file, streaming media, real-time video, radio) can be cached which may explain the extensive use of caching scheme in the mainstream content delivery processes. As a non-limitative example, one can mention Content Distribution Network (CDN), Web Caching (HTTP/FTP) and Peer-to-Peer (P2P).

Caches include proxy caches, gateway caches, reverse caches (surrogates) and any other storage operation that directly affects the delivery of networks contents. They can be located at a number of different locations along the path between a client and an origin server, such as in the front of an origin server or near network gateways, in the aim of maximizing the number of clients that can use caches in the wide area network.

Today, buffering of data in networks is avoided, by for instance minimizing buffers and queues. But the cost of memory is decreasing, which can be used to explicitly encourage long term buffering and caching. Today data is cached based on popularity and usage behavior. A wide range of cache management or cache replacement policies exist, such as the Least Frequently used(LFU) policy, Most Frequently Used (MFU) policy, Least Recently Used (LRU) policy, Most Recently Used (MRU) policy, First In First Out (FIFO) policy, Last In First Out (LIFO) policy, and many others.

There exists a need for alternative cache management algorithms, associated network elements and methods of performing data-retrieval through a network comprising cache memories.

Summary of the invention

When terms as "first", "second", "third" and the like are used, this does not necessarily mean that a sequential or that a chronological order is to be assumed.

A disadvantage of the state of the art approach, in which the first few seconds of a media file are stored in a cache at a location relatively close to the media requesting client, is that the initial part of the total media file is statically defined.

It is an object of the present invention to provide methods that allow the caches to automatically adapt to popular zap points and other trick-play areas in multimedia content, which are otherwise difficult to predict and require too much effort when done manually.

The state of the art, on which the preamble of claim 1 is based, provides a method for managing the data stored in cache memories present in a network, based on popularity and usage information of the data.

It is an object of the present invention to provide alternative solutions.

This is achieved by the characterizing features of claims 1, 14 and 15.

According to a first aspect of the present invention, a method for managing cached data within a network node device (4) comprised in a network is disclosed, the network comprising at least a server (1) hosting a content (2), a client (3) requesting predetermined data comprised in the content and the network node device routing and/or serving a request and comprising a means for storing data (5), wherein the method comprises

  a. indicating a deadline (preferably by the client) to the network node device, the deadline defining a moment in time by which the predetermined data should have been delivered to the client;

  b. determining a measure of urgency for the delivery of the predetermined data to the client in the network node device;
  c. caching predetermined data on or removing predetermined data from the means for storing data of the node, based on the measure of urgency.

According to preferred embodiments, the deadline can be time dependent. It is not necessarily time dependent.

According to preferred embodiments, the deadline can be different for at least 2 different portions of said predetermined data. In other words the deadline can be data portion dependent. The data portion can comprise blocks of the predetermined data. The data blocks can be for instance network packets, 1 or more bytes or bits. In other words, the deadline can be byte or bit dependent.

According to preferred embodiments, indicating a deadline to the network node comprises providing parameter values for a predetermined mapping function, the predetermined mapping function being known to the network node device, the mapping function being a function that maps data portions of the data to data portion dependent deadline values.

According to alternative preferred embodiments, indicating a deadline to the network node comprises providing a mapping function and parameter values for the mapping function, the mapping function being a function that maps data portions of the data to data portion dependent deadline values.

According to preferred embodiments, the mapping function or the predetermined mapping function is a linear function of the relative position of a data portion in the data, and wherein the deadline is provided by providing at least two parameters selected from [start deadline, delivery rate, end deadline]. The start deadline is the deadline for the first data portion, for instance the first byte, of said predetermined data. The end deadline is the deadline for the last data portion, for instance the last byte, of said predetermined data. The delivery rate for a linear mapping function defines a constant bit/byte/packet/block rate.

According to preferred embodiments of the first aspect of the present invention, the measure of urgency (in this case called request-urgency) is a function of or can be defined by the difference between the indicated deadline and the actual time when the request is received by said network node device.

According to preferred embodiments of the first aspect of the present invention, the measure of urgency (in this case called arrival-urgency) is a function of or can be defined by the difference between the arrival time of the predetermined data and the indicated deadline.

According to embodiments of the present invention, the measure of urgency can be a function of request-urgency and arrival-urgency. In other words the measure of urgency can be a function of the difference between the indicated deadline and the actual time when the request is received by said network node device, and of the difference between the arrival time of the predetermined data and the indicated deadline.

If the measure of urgency is defined by the difference between the indicated deadline and the actual time when the request is received by said network node device, or if the measure of urgency is defined by the difference between the arrival time of the predetermined data and the indicated deadline, caching predetermined data on the means for storing data can be performed when the measure of urgency is below a predetermined threshold value.

Whatever measure of urgency that is used, the process of caching predetermined data on the means for storing data can be performed when the measure of urgency is below a predetermined threshold value. The measure of urgency can for instance be normalized.

According to embodiments of the present invention, the method according to any of the previous embodiments can be such that indicating the deadline to the network node device comprises

- formatting a request message identifying the predetermined data and the deadline defining the moment in time by which the predetermined data should have been delivered to the client (preferably by the client);
- sending the request message towards the server;
- receiving the request message by the network node device.

According to embodiments of the present invention, the method according to any of the previous embodiments can be such that it further comprises

- checking if the predetermined data is available in the means for storing data of the network node device;
- if available, forwarding the predetermined information to the client by the network node device, preferably with priority respecting the deadline; and
- if not available, sending a request to the server by the network node device as a client.

The network node device can for instance check the availability of the predetermined data in its means for storing data by inspecting the request parameters, according to preferred embodiments.

According to preferred embodiments of the present invention, caching predetermined data on or removing predetermined data from the means for storing data of the node, can further be based on at least one other state of the art caching algorithm. It can for instance further be based on a popularity based caching algorithm, which is based on a measure of popularity of the data.

In a second aspect of the present invention, a network node device adapted for enabling data caching and delivering within a network is described, the network comprising at least a server (1) hosting a content (2), a client (3) requesting predetermined data comprised in the content, the network node device being adapted for routing and/or serving a request and comprising a means for storing data (5), the network device comprising:

a. a means for receiving a deadline, the deadline defining the moment in time which the predetermined data should have been delivered to the client;
b. a means for determining a measure of urgency for the delivery of the predetermined data to the client;
c. means for caching predetermined data on or removing predetermined data from the means for storing data, based on the measure of urgency.

According to preferred embodiments, the network node is adapted for indicating a deadline which is different for at last two different portions of said predetermined data.

In a third aspect of the present invention, a network node device enabling data caching and delivering within a network is disclosed, the device comprising:

- means for receiving a request message from a client (3) requesting predetermined data comprised in a content, wherein the request message is intended to a server (1) hosting the content (2),
- means for inspecting a network layer header and/or a transport layer header of the request message so as to identify the requested predetermined data and a predetermined deadline defining a moment in time by which the predetermined data should have been delivered to the client;

- means for determining a measure of urgency for the delivery of the predetermined data to the client;
- means for storing data (5);
- means for storing on or removing predetermined data from the means for storing data, based on the measure of urgency.

According to preferred embodiments, the device further comprises

- means for checking if the requested predetermined data is available in the means for storing data;
- means for transmitting a request message as a client identifying the requested data;
- means for forwarding the predetermined information to the client preferably with priority respecting the deadline, if the predetermined data is available in the means for storing data;
- means for sending a request to the server by the network node device as a client, if the predetermined data is not available in the means for storing data.

In a fourth aspect of the present invention, a client device adapted for requesting predetermined data over a network is disclosed, the network comprising at least a server (1) hosting a content (2) comprising the predetermined data and a network node device being adapted for routing and/or serving a request, which is further adapted for indicating a deadline defining the moment in time which the predetermined data should have been delivered to it.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

Brief description of the drawings

The accompanying drawings are used to illustrate embodiments of the present invention.

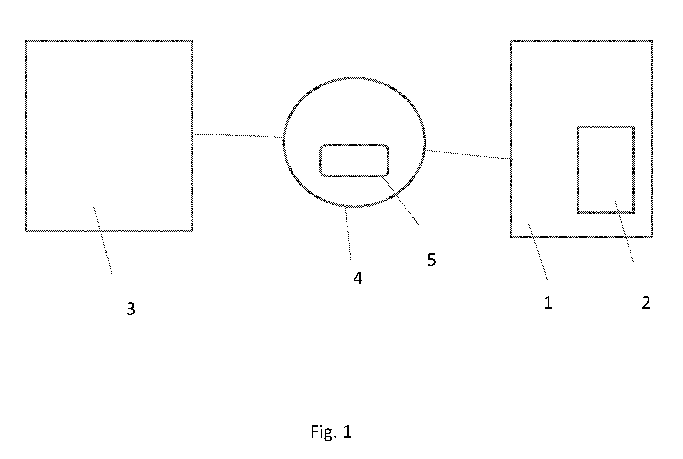

Figs. 1-6 illustrate embodiments according to the present invention.

Description of illustrative embodiments

The above and other advantageous features and objects of the invention will become more apparent and the invention will be better understood from the following detailed description when read in conjunction with the respective drawings.
The description of aspects of the present invention is performed by means of particular embodiments and with reference to certain drawings but the invention is not limited thereto. Depicted figures are only schematic and should not be considered as limiting.
In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

Today, a lot of applications are able to produce requests for content from a server via a network much earlier than on the last moment, which is still typically done today. If an application is requesting too much content upfront, it is competing potentially with more urgent requests.

As proposed in aspects of the present invention, the specification of deadline in a request for content, sent much more upfront then when the data is actually needed, and taking into account a measure of urgency based on this deadline, allows for a more efficient utilization of the network caches and servers as existing today.

A cache replacement strategy is defined that makes use of the knowledge about the urgency of content requests. If there is a big delay of the network, then it is important to cache the urgent or late content. This cache replacement strategy, caching mechanism or policy can be referred to as Least Urgent Requested (LUR) caching. It should be noted that the (LUR) caching policy can be combined with other state of the art policies, as for instance with popularity based caching, but also with others. Many aspects of a typical caching mechanism can further be used in the context of the proposed LUR caching mechanism, as will be recognised by the skilled person.

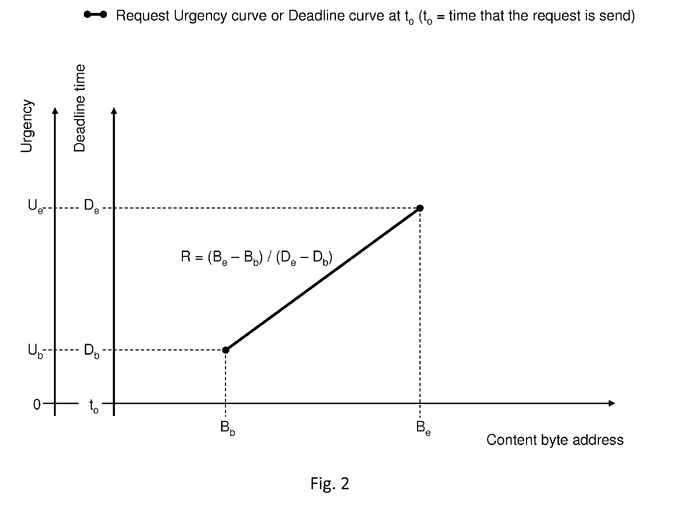

If for each request for content (such as a video segment), also a deadline is provided by the client for each block, packet, byte, bit, ..., then caching nodes are aware of what is urgent and what is not. The deadline can be provided for every byte. This can be achieved by providing a deadline function and parameters that are mapped to the requested segment of data bytes. As an example, in Fig. 2 a linear deadline mapping can be achieved by providing the deadline of the first byte, the deadline of the last byte, and a linear mapping function as follows: Dx = Db + (Bx - Bb) * (De - Db) / (Be - Bb); where "Dx" is the deadline of byte "Bx"; "Db" and "De" are the deadlines of the first (deadline begin) and the last (deadline end) bytes respectively; and "Bb" and "Be" are the first (byte begin) and the last (byte end) byte address respectively. The deadline mapping can also be non-linear, as for instance stepwise, exponential, polynomial, etc.

There are many ways to take into account the urgency in cache replacement or management policies.

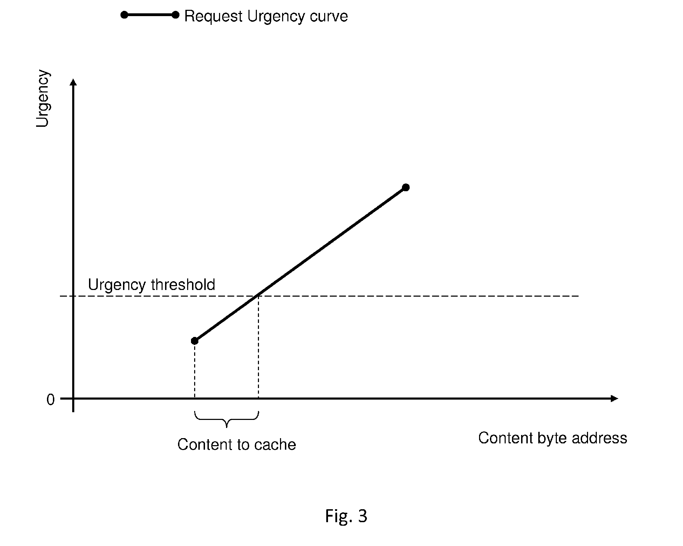

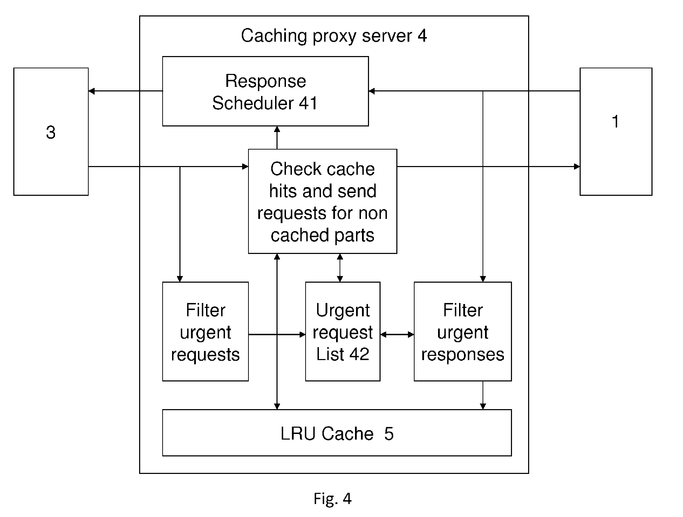

In a first embodiment (illustrated in Figs. 3 and 4), the measure for urgency ($U_x$) is defined by the difference between the indicated deadline ($D_x$) and the actual time when the request is received (to). When this measure is smaller than a predetermined threshold value (e.g. 10 sec, 5 sec, 4sec, 3sec, 2sec, 1sec, 750ms ...) the requested predetermined data is cached in the data storage means, such that the respective data is closer to possible clients when requested again afterwards.

Requests can be sent from a client towards a caching proxy server via the HTTP protocol. The HTTP protocol can therefore be extended with headers to support generic deadline timing information about the requested data. The client is extended to provide the correct deadline timing in the http request(s). The data in this embodiment can be delivered with a constant bit rate within the requested data range, and a linear mapping function is used. If the size of the content is known by the client, the client can derive the required bit rate from the deadlines of the first and the last byte. If the size is not known, then the client must know the bit rate which is needed to play/consume the content.

HTTP headers can be extended with keys to specify the deadline (or urgency) of the content with a linear mapping function, and provide additional response codes to manage typical related responses.

Three headers can be added for the GET request:

"start deadline", "end deadline" and "delivery rate". Exactly 2 of these 3 header fields are preferably to be provided, preferably "start deadline" and "delivery rate". The deadline of each byte in the request is determined by the values assigned to the 2 headers. The "start deadline" header indicates the time by which the client wants the first byte to be received. The "delivery rate" header is used to calculate the delivery time of the intermediate bytes starting from the available start deadline time, for instance as follows:

$$Dx = Db + (Bx - Bb) / R$$

Where Dx is the deadline of data segment, e.g. byte x. Db (Deadline begin) is the deadline of the first byte, Bx is the sequence number of byte x, Bb is the sequence number of the first byte in the range, and R is the bit-rate.

Two additional response codes can be added for GET responses containing deadline timing headers:

- Wait (with the existing Retry-After header)
- Deadline will Expire (with the above 3 headers indicating possible new minimal deadlines that can be met).

Having the above additional deadline timing information, the proxy server receiving the request can calculate which part of the requested content is more urgently requested than a predefined urgency threshold value (e.g. 10 sec, 5 sec, 4sec, 3sec, 2sec, 1sec, 750ms ...). The selection of the part of the data that is below the urgency threshold is explained in correspondence with Fig 3.

The part of the content which is requested more urgently than this threshold is offered to a state of the art popularity based cache module in this embodiment. Meaning that content which is for example least recently used, will be replaced in the cache with this most recently used, or, when the content is already in the cache, meaning that the previous used-indication is reset to the new used-indication.

The proxy server can support partial content retrieval from the server, using the HTTP range header extension. This allows requesting only a part of the content item, typically the part which is not cached. Also the client (or an other proxy server acting as a client) can request ranges of content instead of the complete item. The proxy server can be enabled to support this mechanism.

Explained in more detail, and illustrated in Fig. 4, the client sends a request to the caching proxy server. The incoming request is filtered for the urgent parts, which are stored in the urgent request list. The filtering is performed based on the urgency threshold as explained above. The incoming request is also processed to check cache hits. If parts of the request are in the cache, then the response scheduler is informed about this, and checks if the next content to send is in the cache. If it is, he can start sending the content, if not, he must wait for the data to arrive from the server. Parts of the request which are not in the cache, are further requested towards the server, respecting the deadlines of the incoming request. Before sending the requests, the urgent request list (42) is checked if there are other pending requests for the same data. If so, that part is skipped if the other request is more urgent, or the overlapping part of the other request is canceled, and this more urgent request is sent to the server. Content that is received by the caching proxy server, is sent to the response scheduler for delivery to the client. It is also filtered based on the urgent request list (42). Content that is identified by this list is stored in the cache, and that part of the content is removed from the request in the urgent request list.

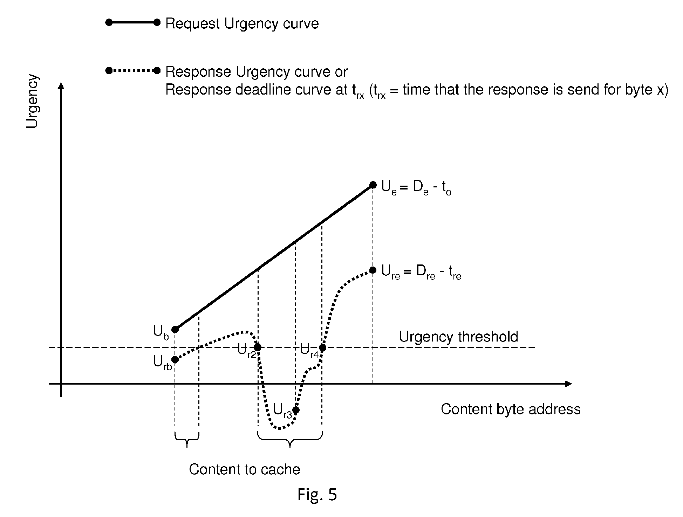

In a second embodiment the measure of urgency can be a function of or can be defined by the difference between the arrival time of said predetermined data and the indicated deadline. The diagram in Fig 5 shows the urgency of each byte when it is received by the proxy server. If the urgency of the content at arrival is lower than a predetermined threshold, then the content is selected for caching. If the arrival time is later than the deadline, then the deadline is missed as for $U_{r3}$. If the deadline of the incoming content (as a result of cache misses) is small (or even missed) then the content is important to be cached closer to the client to reduce the retrieval-delay. In this way, deadline misses can be avoided for future requests of the same content.

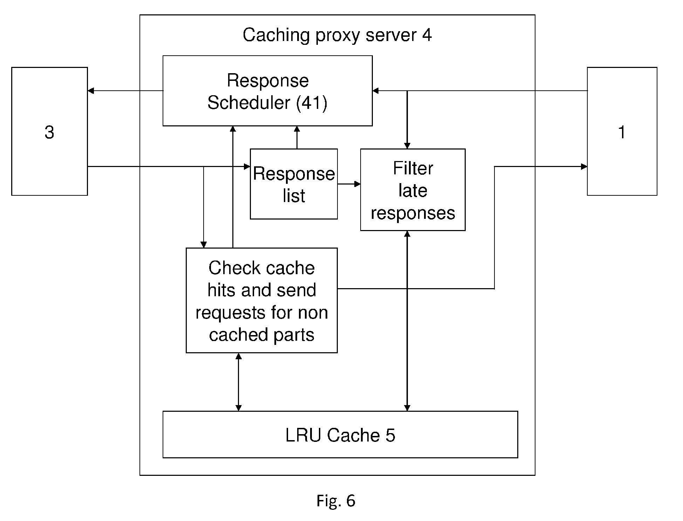

In Fig. 6 a caching proxy server is shown, that is caching late arrivals, based on the arrival/response deadline. The Response scheduler keeps a list of incoming requests, that must be responded to. The details of the deadlines are kept in this list per request. The incoming request is also processed to check cache hits. If parts of the request are in the cache, then the response scheduler is informed about this, and checks if the next content to send is in the cache. If it is, he can start sending the content, if not, he must wait for the data to arrive from the server. Parts of the request which are not in the cache, are further requested towards the server, respecting the deadlines of the incoming request. Content that is received by the caching proxy server, is sent to the response scheduler for delivery to the client. It can also be filtered based on the requested deadlines kept in the response list. Content that is close to the delivery deadline (has a lower response urgency than the predefined urgency threshold) is stored in the cache. The cache can use any popularity based replacement strategy (here for example a state of the art LRU algorithm).

In a third embodiment, the urgency (either request urgency or arrival urgency, or a combination of both) can be used to keep a counter per block of content in the cache. For example 10 levels of urgency can be defined, each with another counter value as a result. The cache can have for example 101 cache locations. Content with an urgency in the most urgent level (for example, urgency less than 1 second) gets the highest counter value (1000 in this case). Content with an urgency in the second most urgent level (for example between 1 and 2 seconds) get the second highest counter value (900 in this case). The other levels of urgency result in a counter value of 800, 700, 600, 500, 400, 300, 200, and 100. Content that is less urgent than the lowest level, will not be taken into account for caching. Once the counter value is determined based on the urgency levels the content is stored in the cache replacing the content with the lowest counter value. The caching algorithm will keep the total sum of all counter values for all the cache locations constant, to avoid drift and overflow of countervalues. In a certain view it introduces an aging effect. The difference between the new and old counter value is evenly decremented from the counters in the other cache locations. If the new counter value is 1000 and the old counter value was 225, then 25 location are decremented with a value of 7, and 75 with a value of 8. A total of 775 is added by setting the new counter value to the replaced cache location, and a total of 775 is decremented by decrementing the counters of the other cache locations, resulting is an overall equality of counter values. If the content was already in the cache then the weighted average can be calculated of the old and new counter values as follows:

$$CR = (\alpha - 1) * CO + \alpha * CN$$

Where CR is the resulting counter value, CO the old and CN the new counter value and $\alpha$ (alpha) is a constant that can be chosen with $1 >= \alpha > 0$ (is also known as the exponentially weighted average).

Again, difference between the old counter value (CO) and the resulting counter value (CR) needs to be evenly decremented from the counter values of the other locations.

In a fourth embodiment, the urgency (either request urgency or arrival urgency, or a combination of both) can be used to keep a counter per block/range of content in the cache, with the exponentially weighted average of the previous and new urgency value, and additionally increase the counters per block/range at a periodic interval. Note that if the urgency value is increased, the urgency is lowered (higher urgency value is less urgent delivery requirement).

While some embodiments described herein include some but not other features included in other embodiments, combinations of features of different embodiments are meant to be within the scope of the invention, and form different embodiments, as would be understood by the skilled person.

While the principles of the invention have been set out above in connection with specific embodiments, it is to be clearly understood that this description is merely made by way of example and not as a limitation of the scope of protection which is determined by the appended claims.

It should be noted that wherever the term "means" or "means for" has been used in the above description, the term "apparatus" or "apparatus for" could have been used.

**Claims**

1. A method for managing cached data within a network node device (4) comprised in a network, said network comprising at least a server (1) hosting a content (2), a client (3) requesting predetermined data comprised in said content and said network node device routing and/or serving a request and comprising a means for storing data (5), **characterized in that** said method comprises

   a. indicating a deadline to said network node device, said deadline defining the moment in time by which said predetermined data should have been delivered to said client;
   b. determining a measure of urgency for the delivery of said predetermined data to said client in said network node device;
   c. caching predetermined data on or removing predetermined data from said means for storing data of said node, based on said measure of urgency.

2. A method according to claim 1, wherein said deadline is time dependent.

3. A method according to claim 1 to 2, wherein said deadline is different for at last 2 different portions of said predetermined data.

4. A method according to claims 3, wherein said deadline is byte dependent.

5. A method according to any of the previous claims 2 to 4, wherein indicating a deadline to said network node comprises providing parameter values for a predetermined mapping function, said predetermined mapping function being known to said network node device, said mapping function being a function that maps data portions of said data to data portion dependent deadline values.

6. A method according to any of the previous claims 1 to 4, wherein indicating a deadline to said network node comprises providing a mapping function and parameter values for said mapping function, said mapping function being a function that maps data portions of said data to data portion dependent deadline values.

7. A method according to any of claims 5 to 6, wherein said mapping function or said predetermined mapping function is a linear function of the relative position of a data portion in said data, and wherein said deadline is provided by providing at least two parameters selected from [start deadline, delivery rate, end deadline].

8. Method according to any of the previous claims, wherein said measure of urgency is a function of the difference between the indicated deadline and the actual time when the request is received by said network node device.

9. Method according to any of the previous claims, wherein said measure of urgency is a function of the difference between the arrival time of said predetermined data and the indicated deadline.

10. A method according to any of the previous claims, wherein caching predetermined data on said means for storing data is performed when said measure of urgency is below a predetermined threshold value.

11. A method according to any of the previous claims, wherein indicating said deadline to said network node device comprises:

> - formatting a request message identifying said predetermined data and said deadline defining the moment in time by which said predetermined data should have been delivered to said;
> - sending said request message towards said server;
> - receiving the request message by said network node device.

12. A method according to claim 11, further comprising

> - checking if said predetermined data is available in said means for storing data of said network node device;
> - if available, forwarding said predetermined information to said client by said network node device, preferably with priority respecting the deadline; and
> - if not available, sending a request to the server by said network node device as a client.

13. A method according to any of the previous claims, wherein caching predetermined data on or removing predetermined data from said means for storing data of said node, is further based on at least one other state of the art caching algorithm, such as for instance a popularity based caching algorithm.

14. A network node device adapted for enabling data caching and delivering within a network, said network comprising at least a server (1) hosting a content (2), a client (3) requesting predetermined data comprised in said content, said network node device being adapted for routing and/or serving a request and comprising a means for storing data (5), said network device comprising:

> a. a means for receiving a deadline, said deadline defining the moment in time which said predetermined data should have been delivered to said client;
> b. a means for determining a measure of urgency for the delivery of said predetermined data to said client;
> c. means for caching predetermined data on or removing predetermined data from said means for storing data, based on said measure of urgency.

15. A client device adapted for requesting predetermined data over a network, said network comprising at least a server (1) hosting a content (2) comprising said predetermined data and a network node device being adapted for routing and/or serving a request, which is further adapted for indicating a deadline defining the moment in time which said predetermined data should have been delivered to it.

3

4

5

1

2

Fig. 1

Fig. 2

Fig. 3

Caching proxy server 4

Response
Scheduler 41

3

1

Check cache
hits and send
requests for non
cached parts

Filter
urgent
requests

Urgent
request
List 42

Filter
urgent
responses

LRU Cache 5

Fig. 4

Fig. 5

Caching proxy server 4

Response
Scheduler (41)

3

1

Response
list

Filter
late
responses

Check cache
hits and send
requests for non
cached parts

LRU Cache 5

Fig. 6

Europäisches
Patentamt

European
Patent Office

Office européen
des brevets

# EUROPEAN SEARCH REPORT

Application Number

EP 09 30 6025

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI X ET AL: "Design and performance analysis of multimedia document retrieval strategies for networked Video-on-Reservation systems" COMPUTER COMMUNICATIONS, ELSEVIER SCIENCE PUBLISHERS BV, AMSTERDAM, NL, vol. 28, no. 17, 17 October 2005 (2005-10-17), pages 1910-1924, XP025273258 ISSN: 0140-3664 [retrieved on 2005-10-17] * abstract * * Sections 2.1, 2.4.1, 3.2, 3.3, 5. * ----- | 1-15 | INV. H04L29/08 |
| X | GOPALAKRISHNAN V ET AL: "CPM: Adaptive Video-on-Demand with Cooperative Peer Assists and Multicast" INFOCOM 2009. THE 28TH CONFERENCE ON COMPUTER COMMUNICATIONS. IEEE, IEEE, PISCATAWAY, NJ, USA, 19 April 2009 (2009-04-19), pages 91-99, XP031468749 ISBN: 978-1-4244-3512-8 * abstract * * Sections I., II., III. * ----- | 1-15 | |
| X | YANG GUO ET AL: "PONDER: Performance Aware P2P Video-on-Demand Service" GLOBAL TELECOMMUNICATIONS CONFERENCE, 2007. GLOBECOM '07. IEEE, IEEE, PISCATAWAY, NJ, USA, 1 November 2007 (2007-11-01), pages 225-230, XP031195978 ISBN: 978-1-4244-1042-2 | 15 | TECHNICAL FIELDS SEARCHED (IPC) H04L |
| A | * abstract * * Section II. * ----- -/-- | 1-2,14 | |

The present search report has been drawn up for all claims

| Place of search | Date of completion of the search | Examiner |
|---|---|---|
| The Hague | 8 February 2010 | Kesting, Volker |

EPO FORM 1503 03.82 (P04C01)

Europäisches
Patentamt

European
Patent Office

Office européen
des brevets

**EUROPEAN SEARCH REPORT**

Application Number

EP 09 30 6025

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SONGQING CHEN ET AL: "A Case for Internet Streaming via Web Servers" MULTIMEDIA AND EXPO, 2006 IEEE INTERNATIONAL CONFERENCE ON, IEEE, PI, 1 July 2006 (2006-07-01), pages 2145-2148, XP031033293 ISBN: 978-1-4244-0366-0 * abstract * * Sections 1. and 2. * | 11-13 | |

TECHNICAL FIELDS
SEARCHED      (IPC)

The present search report has been drawn up for all claims

| Place of search | Date of completion of the search | Examiner |
|---|---|---|
| The Hague | 8 February 2010 | Kesting, Volker |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

EPO FORM 1503 03.82 (P04C01)